# EUROPEAN PATENT SPECIFICATION

(11) **EP 2 250 085 B1**
(45) Date of publication and mention of the grant of the patent: **26.08.2015**
(21) Application number: 09713923.2
(22) Date of filing: 17.02.2009
(51) Int. Cl.: B64C 23/04

(54) **SHOCK BUMP ARRAY**
ANORDNUNG STOSSERZEUGENDER KONTURBEULEN
RÉSEAU DE BOSSES ANTICHOCS

(30) Priority: 29.02.2008 GB 0803730
(43) Date of publication of application: 17.11.2010
(73) Proprietor: Airbus Operations Limited, Bristol BS34 7PA (GB)
(72) Inventor: WOOD, Norman, Bristol BS99 7AR (GB)
(74) Representative: Ribeiro, James Michael
(86) International application number: PCT/GB2009/050154
(87) International publication number: WO 2009/106873

(56) References cited:
- US-A- 3 578 264
- US-A- 4 354 648
- US-A1- 2006 060 720
- OGAWA ET AL: "Shock/boundary layer interaction control using three-dimensional bumps for transonic wings" COLLECTION OF TECHNICAL PAPERS ; 45TH AIAA AEROSPACE SCIENCES MEETING (45TH AIAA AEROSPACE SCIENCES MEETING 2007 - 20070108 TO 20070111 - RENO, NV),, vol. AIAA 2007-324, 8 January 2007 (2007-01-08), pages 1-23, XP009120958 ISBN: 978-1-56347-890-1
- BIRKEMEYER ET AL: "Shock control on a swept wing" AEROSPACE SCIENCE AND TECHNOLOGY, EDITIONS SCIENTIFIQUES ET MEDICALES ELSEVIER, vol. 4, no. 3, 1 January 2000 (2000-01-01), pages 147-156, XP009120950 ISSN: 1270-9638
- HOLDEN ET AL: "Shock/Boundary layer interaction control using 3D devices" 41ST AIAA AEROSPACE SCIENCES MEETING & EXHIBIT : 6 - 9 JANUARY 2003, RENO, NEVADA, AMERICAN INSTITUTE OF AERONAUTICS AND ASTRONAUTICS, vol. 41st, no. Paper 2003-0447, 6 January 2003 (2003-01-06), pages 1-8, XP009120854 cited in the application
- DARGEL G ET AL: "Chapter 21: Assessment of Shock and Boundary Layer Control Concepts for Hybrid Laminar Flow Wing Design" DRAG REDUCTION BY SHOCK AND BOUNDARY LAYER CONTROL. RESULTS OF THE PROJECT EUROSHOCK II, SUPPORTED BY THE EUROPEAN UNION 1996--1999 (BOOK SERIES: NOTES ON NUMERICAL FLUID MECHANICS AND MULTIDISCIPLINARY DESIGN),, vol. 80, 1 January 2002 (2002-01-01), pages 383-414, XP009120959 ISBN: 978-3-540-43317-0

## Description

### FIELD OF THE INVENTION

The present invention relates to an aerodynamic structure comprising an array of shock bumps extending from its surface; and a method of operating such a structure.

### BACKGROUND OF THE INVENTION

As described in Holden, H.A. and Babinsky, H. (2003) Shock/boundary layer interaction control using 3D devices In: 41st Aerospace Sciences Meeting and Exhibit, January 6-9, 2003, Reno, Nevada, USA, Paper no. AIAA 2003-447 (referred to below as "Holden et al.") as a transonic flow passes over a 3-D shock bump the supersonic local conditions induce a smeared shock foot with a lambda-like wave pattern. Different 3-D shock bump shapes are described in Ogawa et al: Shock-wave/boundary-layer interaction control using three-dimensional bumps for transonic wings, COLLECTION OF TECHNICAL PAPERS; 45TH AIAA AEROSPACE SCIENCES MEETING (45TH AIAA AEROSPACE SCIENCES MEETING 2007 - 20070108 TO 20070111 - RENO, NV), vol. AIAA 2007-324, 8 January 2007, pages 1-23, XP009120958, ISBN: 978-1-56347-890-1.

Conventionally such shock bumps are arranged in a single line which is positioned so as to modify the structure of the shock for a single operating condition. However for "off-design" operating conditions the position of the shock may change, making the shock bumps ineffective.

US 2006/0060720 uses a shock control protrusion to generate a shock extending away from the lower surface of a wing. Multiple shock control protrusions can be mounted on the lower surface of the wing and can be aligned along an axis which is parallel with the leading edge or positioned at the same fractional chordwise location over the span of the airfoil.

### SUMMARY OF THE INVENTION

A first aspect of the invention provides an aerodynamic structure comprising an array of shock bumps extending from its surface, the array comprising: a first series of

A first aspect of the invention provides an aerodynamic structure comprising an array of shock bumps extending from its surface, the array comprising: a first series of shock bumps arranged in a substantially straight or gradually curved line; and one or more shock bumps positioned aft of the first series, thereby providing one or more shock bumps positioned aft of the first series instead of a single line. The first series of shock bumps is shaped and positioned so as to induce a smeared foot in a shock with a lambda like wave pattern when the structure is operated at a first Mach number or lift coefficient; and wherein the one or more shock bumps positioned aft of the first series is (are) shaped and positioned so as to induce a smeared foot in the shock with a lambda like wave pattern when the structure is operated at a second Mach number or lift coefficient.

The one or more shock bumps positioned aft of the first series may be a single shock bump or a second series of shock bumps. In one embodiment, where the one or more shock bumps positioned aft of the first series is a second series of shock bumps, there are fewer shock bumps in the second series than the first series.

Preferably at least one of the shock bumps positioned aft of the first series is offset so that it is not positioned directly aft of any of the shock bumps in the first series.

In one embodiment, a leading edge of at least one of the shock bumps positioned aft of the first series is positioned forward of a trailing edge of at least an adjacent one of the bumps in the first series.

The first series of shock bumps and/or the shock bumps positioned aft of the first series may be arranged in a line, and each line may be substantially straight or gradually curved. Alternatively the shock bumps positioned aft of the first series may be arranged in a non-linear array.

By providing one or more shock bumps positioned aft of the first series instead of a single line, the first series of shock bumps and the one or more shock bumps positioned aft of the first series can be positioned to modify the structure of a shock which forms under a different respective condition.

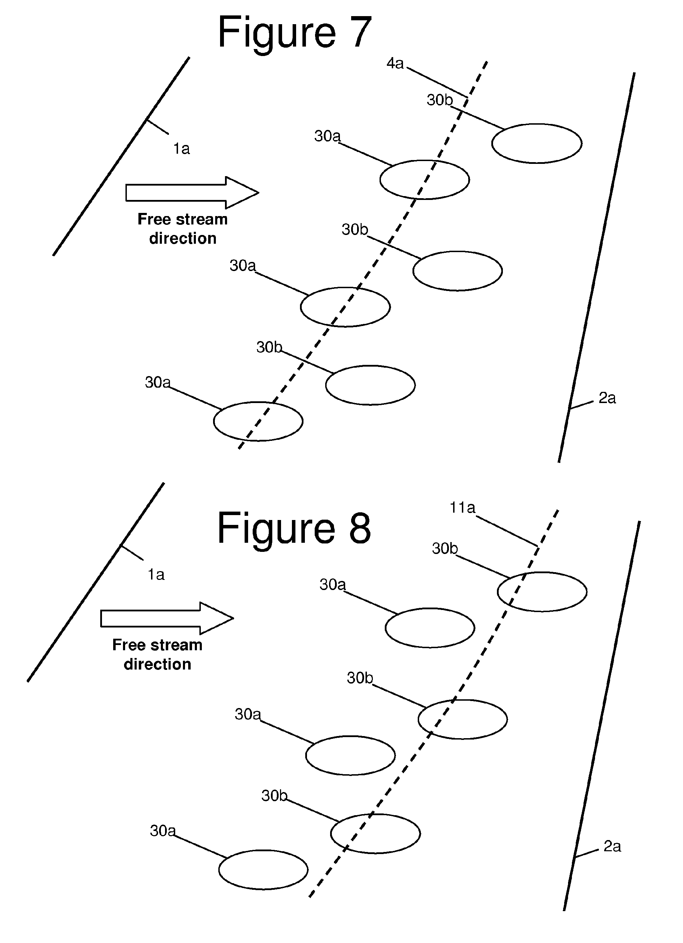

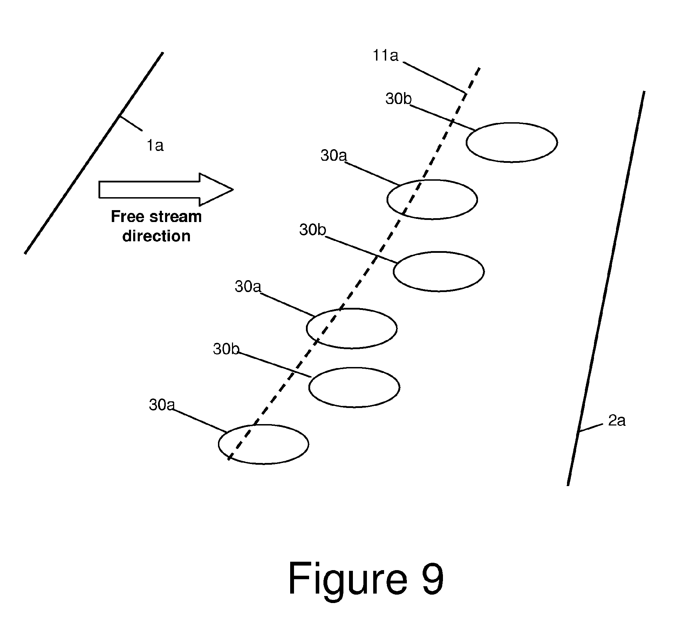

The bumps may have any of the conventional shapes described in Figures 8 and 9 of Holden et al. Alternatively at least one of the shock bumps (preferably in the second series) may comprise a diverging nose and a converging tail, and the tail has at least one plan-form contour line with a pair of concave opposite sides. The opposite sides of the plan-form contour line may become convex and meet each other head-on at the trailing edge of the shock bump, or may meet at a cusp-like point.

A second aspect of the invention provides a method of operating an aerodynamic structure comprising an array of shock bumps extending from its surface, the array comprising a first series of shock bumps, the method comprising: operating the structure at a first Mach number or lift coefficient; operating the structure at a second Mach number or lift coefficient; wherein the first series of shock bumps modify the structure of a shock which forms adjacent to the surface of the structure when it is operated at the first Mach number or lift coefficient; and one or more shock bumps positioned aft of the first series modify the structure of a shock which forms adjacent to the surface of the structure when it is operated at the second Mach number or lift coefficient which is higher than the first Mach number or lift coefficient. The first series of shock bumps induces a smeared foot in the shock with a lambda like wave pattern when the structure is operated at the first Mach number or lift coefficient; and the one or more shock bumps positioned aft of the first series induces a smeared foot in the shock with a lambda like wave pattern when the structure is operated at the second Mach number or lift coefficient

The flow over at least one of the shock bumps of the one or more shock bumps positioned aft of the first series is substantially fully attached when the structure is operated at the first condition.

Typically the flow over at least one of the shock bumps of the one or more shock bumps positioned aft of the first series detaches and forms a pair of longitudinal vortices when the structure is operated at the second condition.

Typically each bump has a leading edge, a trailing edge, an inboard edge and an outboard edge. The bumps may merge gradually into the surface at its edges or there may be an abrupt concave discontinuity at one or more of its edges.

Typically each bump has substantially no sharp convex edges or points.

Typically the first series of shock bumps is shaped and positioned so as to modify the structure of a shock which would form adjacent to the surface of the structure in the absence of the first series of shock bumps when the structure is operated at a first condition; and the one or more shock bumps positioned aft of the first series is (are) shaped and positioned to modify the structure of a shock which would form adjacent to the surface of the structure in the absence of the one or more shock bumps positioned aft of the first series when the structure is operated at a second condition. This can be contrasted with US 2006/0060720 which uses a shock control protrusion to generate a shock which would not otherwise exist in the absence of the shock control protrusion.

The structure may comprise an aerofoil such as an aircraft wing, horizontal tail plane or control surface; an aircraft structure such as a nacelle, pylon or fin; or any other kind of aerodynamic structure such as a turbine blade.

In the case of an aerofoil the shock bumps may be located on a high pressure surface of the aerofoil (that is, the lower surface in the case of an aircraft wing) but more preferably the surface is a low pressure surface of the aerofoil (that is, the upper surface in the case of an aircraft wing). Also each bump in the first series typically has an apex which is positioned towards the trailing edge of the aerofoil, in other words it is positioned aft of 50% chord. The apex of the bump may be a single point, or a plateau. In the case of a plateau then the leading edge of the plateau is positioned towards the trailing edge of the aerofoil.

### BRIEF DESCRIPTION OF THE DRAWINGS

Embodiments of the invention will now be described with reference to the accompanying drawings, in which:
Figure 1 is a plan view of the top of an aircraft wing carrying an array of shock bumps according to a first embodiment of the invention, operating at its "design" operating condition;
Figures 2 is a longitudinal cross-sectional view through the centre of one of the bumps taken along a line A-A, with the wing in its "design" operating condition;
Figure 3 is a plan view of the top of the aircraft wing of Figure 1, with the wing in an "off-design" operating condition;
Figure 4 is a longitudinal cross-sectional view through the centre of one of the bumps taken along a line B-B, with the wing in the "off-design" operating condition;
Figure 5 is a transverse cross-sectional view through the centre of one of the bumps taken along a line C-C;
Figure 6 is a plan view of one of the bumps showing a series of contour lines;
Figure 7 is a plan view of the top of an aircraft wing carrying an array of shock bumps according to a second embodiment of the invention, operating at its "design" operating condition;
Figure 8 is a plan view of the top of the aircraft wing of Figure 7, with the wing in an "off-design" operating condition;
Figure 9 is a plan view of the top of an aircraft wing carrying an array of shock bumps according to a third embodiment of the invention, operating at its "off-design" operating condition; and
Figure 10 is a plan view of the top of an aircraft wing carrying an array of shock bumps according to a fourth embodiment of the invention.

### DETAILED DESCRIPTION OF EMBODIMENT(S)

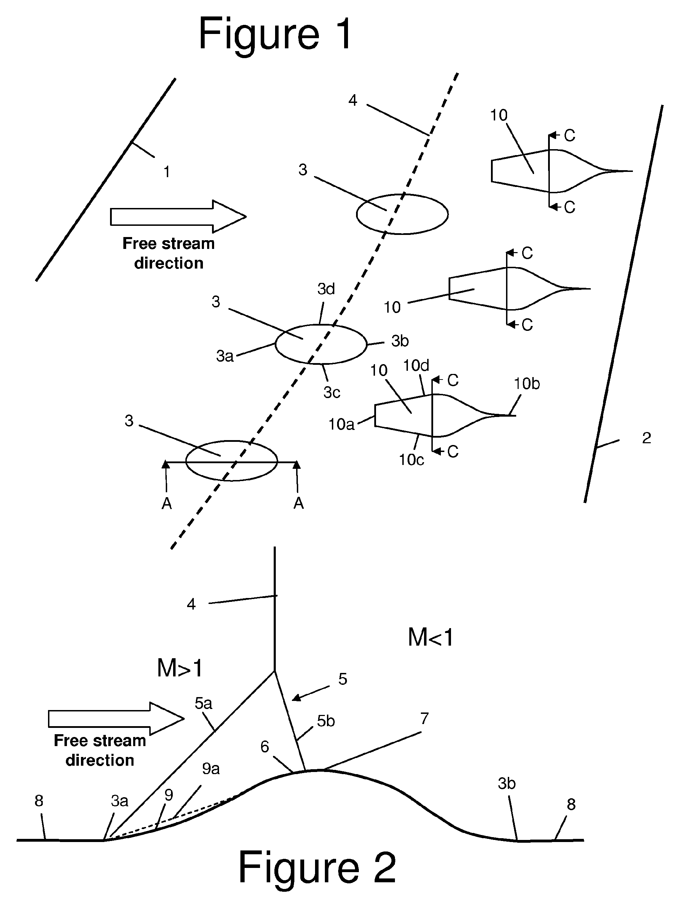

Figure 1 is a plan view of the upper surface of an aircraft wing. The wing has a leading edge 1 and a trailing edge 2, each swept to the rear relative to the free stream direction.

The upper surface of the wing carries an array of 3D shock bumps extending from its surface. The array comprises a first series of shock bumps 3; and a second series of shock bumps 10 positioned aft of the first series, relative to the free stream direction.

Each bump protrudes from a nominal surface of the wing, and meets the nominal surface 8 at a leading edge 3a, 10a; a trailing edge 3b, 10b; an inboard edge 3c, 10c; and an outboard edge 3d, 10d. The lower portions of the sides of bump are concave and merge gradually into the nominal surface 8. For example in Figure 2 the lower portion 9 of the front side of the bump merges gradually into the nominal surface 8 at leading edge 3a. Alternatively there may be an abrupt discontinuity at one or more of the edges of the bump. For instance the lower portion of the front side of the bump may be planar as illustrated by dashed line 9a. In this case the front side 9a of the shock bump meets the nominal surface 8 with an abrupt discontinuity at the leading edge 3 a.

Figure 2 is a cross-sectional view through the centre of one of the bumps 3 taken along a line A-A parallel with the free stream direction. The apex point 7 of the fore/aft cross-section A-A is offset aft of the centre 6 of the bump.

The apex 7 of each bump 3 is positioned aft of 50% chord, typically between 60% and 65% chord.

At transonic speeds a shock forms normal to the upper surface of the wing. Figures 1 and 2 show the position 4 of the shock when the aircraft is operated with a Mach number and lift coefficient which together define a "design" operating condition (generally associated with the cruise phase of a flight envelope). At this "design" operating condition the shock bumps 3 are positioned so as to induce a smeared foot 5 in the shock 4 with a lambda like wave pattern as shown in Figure 2, and the flow over the second series of shock bumps 10 is fully attached.

When the shock bumps 3 are operated at their optimum with the shock 4 just ahead of the apex 7 of the bump as shown in Figure 2, the smeared foot 5 has a lambda-like wave pattern with a single forward shock 5a towards the leading edge of the bump and a single rear shock 5b positioned slightly forward of the apex 7. Alternatively, instead of having only a single forward shock 5a, the smeared foot may have a lambda-like wave pattern with a fan-like series of forward shocks.

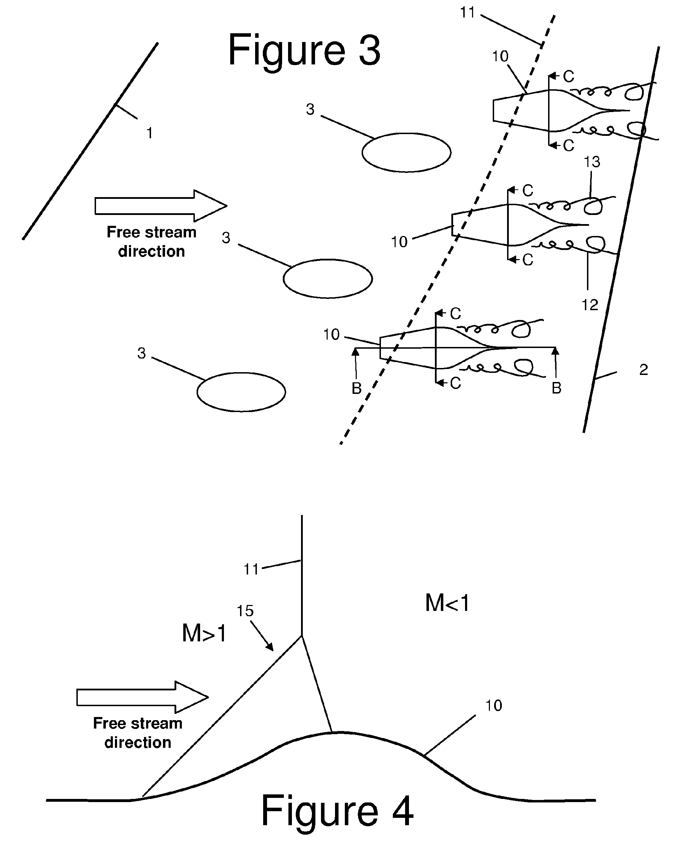

The second series of shock bumps 10 is positioned to modify the structure of a shock 11 which forms adjacent to the surface of the wing when the aerofoil is operated at a higher Mach number or lift coefficient associated with an "off-design" operating condition as shown in Figures 3 and 4. When the lift coefficient or Mach number increases, the shock moves aft to a position 11 shown in Figure 3, and the shock bumps 10 are positioned so as to induce a smeared shock foot 15 with a lambda like wave pattern as shown in Figure 4.

Note that, unlike vortex generators, the bumps have no sharp convex edges or points so the flow remains attached over the bumps when they are operated at their optimum (i.e. when the shock is positioned on the bump just ahead of its apex). A characteristic of three-dimensional shock bumps is that when operated away from their optimum i.e. when the shock is positioned on the bump but not just ahead of the apex of the bump, the flow at the rear of the bump tends to detach. This rear bump separation is exploited to form a pair of counter rotating longitudinal vortices 12,13 aligned with the flow direction that will have a similar positive impact on high speed buffet as VVGs. These vortices are embedded in or just above the boundary layer. When operated at normal cruise conditions as shown in Figure 1 the flow is fully attached and the usual parasitic drag of VVGs is avoided. Hence the shock bumps 10 provide an improved flight envelope and speed range or reduced loads at high speed.

The centres of the second series of shock bumps are offset slightly relative to the centres of the first series, so that none of the shock bumps 10 in the second series have their centres positioned directly aft of the centre of any of the shock bumps 3 in the first series.

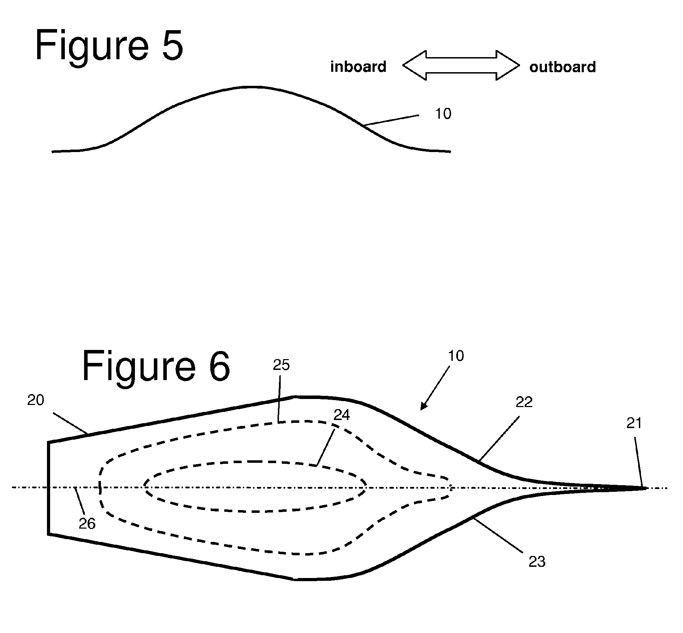

Figure 5 is a lateral cross-section through the centre of one of the bumps 10, and Figure 6 shows a series of plan-form contour lines (equivalent to contour lines in a map) including a footprint contour line in solid line where the shock bump merges into the upper surface of the wing; an intermediate contour line 25; and an upper contour line 24. The footprint contour line comprises a diverging nose 20 and a converging tail with concave opposite sides 22,23 which meet at a cusp-like point 21 at the trailing edge of the bump. The tail of the intermediate contour line 25 has a pair of concave sides which become convex and meet head-on at the trailing edge of the contour line 25. The shock bump 10 is laterally symmetric about its fore-and-aft centre line 26.

The detailed shape of each individual shock bump 10 can be adjusted from the shape illustrated such that at the "design" operating condition the flow over the bump is fully attached as shown in Figure 1. When operated at higher Mach number or lift coefficient as shown in Figure 3, some beneficial modification of the shock foot will take place in addition to the formation of a pair of longitudinal vortices.

Similar levels of buffet alleviation as achieved by VVG devices is anticipated and the concept could be applied to other aerodynamic structures such as turbine blades, nacelles, pylons, fins and tails.

In the embodiment of Figure 1, the wing carries an array of shock bumps comprising a first series of shock bumps 3 with an elliptical footprint, and a second series of cusp-shaped shock bumps 10 positioned aft of the first series. However, in another embodiment of the invention (not shown) both series of shock bumps may be cusp-shaped.

Figure 7 is a plan view of the upper surface of an aircraft wing according to a second embodiment of the present invention. The wing has a leading edge 1a and a trailing edge 2a, each swept to the rear relative to the free stream direction. The upper surface of the wing carries an array of shock bumps extending from its surface. The array comprises a first series of shock bumps 30a; and a second series of shock bumps 30b positioned aft of the first series.

At transonic speeds a shock forms normal to the upper surface of the wing. Figure 7 shows the position 4a of the shock when the aircraft is operated at a "design" operating condition. At this "design" operating condition the shock bumps 30a are positioned so as to induce a smeared foot in the shock 4a with a lambda like wave pattern similar to the shock foot shown in Figure 2, and the flow over the second series of shock bumps 30a is fully attached.

The second series of shock bumps 30b is positioned to modify the structure of a shock 11a which forms adjacent to the surface of the wing when the aerofoil is operated at a higher Mach number or lift coefficient associated with an "off-design" operating condition as shown in Figure 8. Unlike the shock bumps in the first embodiment, the second shock bumps 30b are identical in shape to the first series of shock bumps 30a.

Figure 9 is a plan view of the upper surface of an aircraft wing according to a third embodiment of the present invention. The embodiment of Figure 9 is identical to the embodiment of Figures 7 and 8, except in this case the two series of shock bumps 30a, 30b are less spaced part in a chord-wise sense, so the leading edge of the aft bumps 30b is positioned forward of the trailing edge of the adjacent forward bumps 30a so the two series partially overlap.

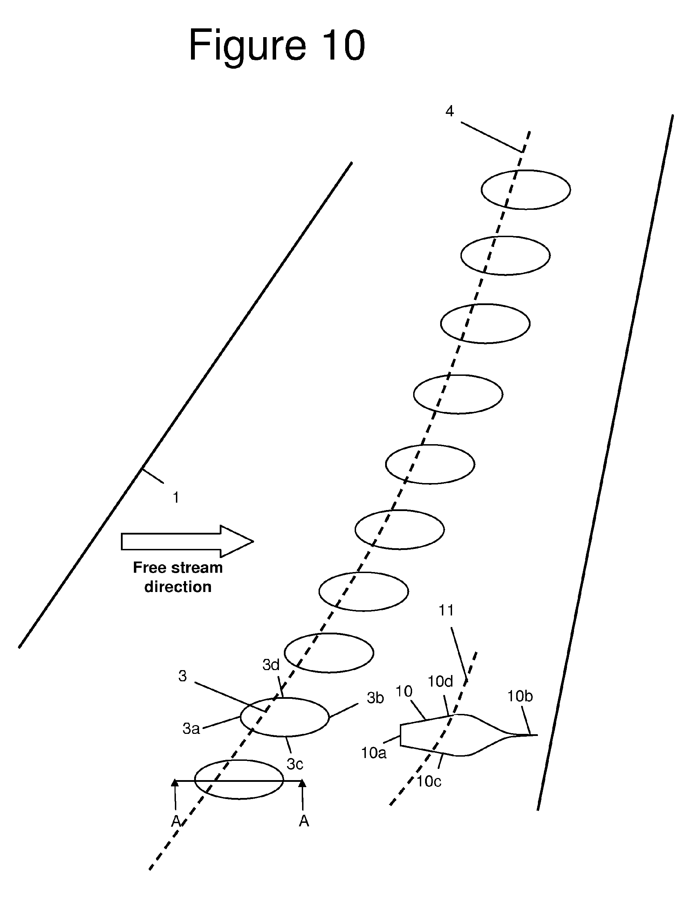

Figure 10 is a plan view of the upper surface of an aircraft wing according to a fourth embodiment of the present invention. The embodiment of Figure 10 is identical to the embodiment of Figure 1, except in this case the forward series has ten shock bumps 3, whereas there is only a single rear shock bump 10. Figure 10 shows the span-wise extent of the shocks 4, 11. It can be seen that the shock 4 extends over a significant span-wise portion of the wing, whereas the shock 11 is relatively short so only a small number of rear shock bumps 10 (in this case only one) is needed.

Although the invention has been described above with reference to one or more preferred embodiments, it will be appreciated that various changes or modifications may be made without departing from the scope of the invention as defined in the appended claims.

## Claims

1. An aerodynamic structure comprising an array of shock bumps extending from its surface, the array comprising:
a. a first series of shock bumps (3) arranged in a substantially straight or gradually curved line; and **characterised in**
b. one or more shock bumps (10) positioned aft of the first series, thereby providing one or more shock bumps positioned aft of the first series instead of a single line,
wherein the first series of shock bumps is shaped and positioned so as to induce a smeared foot in a shock with a lambda like wave pattern when the structure is operated at a first Mach number or lift coefficient; and wherein the one or more shock bumps positioned aft of the first series is (are) shaped and positioned so as to induce a smeared foot in the shock with a lambda like wave pattern when the structure is operated at a second Mach number or lift coefficient, wherein the flow over at least one of the shock bumps of the one or more shock bumps positioned aft of the first series is substantially fully attached when the structure is operated at the first Mach number or lift coefficient.

2. The structure of claim 1 wherein the one or more shock bumps positioned aft of the first series is a single shock bump.

3. The structure of claim 1 wherein the one or more shock bumps positioned aft of the first series is a second series of shock bumps.

4. The structure of claim 3 wherein there are fewer shock bumps in the second series than the first series.

5. The structure of any preceding claim wherein a leading edge of at least one of the one or more shock bumps (30b) positioned aft of the first series is positioned forward of a trailing edge of at least an adjacent one of the bumps (30a) in the first series.

6. The structure of any preceding claim wherein a centre of at least one of the one or more shock bumps positioned aft of the first series is offset so that it is not positioned directly aft of a centre of any of the shock bumps in the first series.

7. The structure of any preceding claim wherein at least one of the shock bumps comprises a diverging nose and a converging tail, wherein the tail has at least one plan-form contour line with a pair of concave opposite sides which preferably meet at a cusp (10b).

8. The structure of any preceding claim wherein each bump has a leading edge (3a), a trailing edge (3b), an inboard edge (3c) and an outboard edge (3d).

9. The structure of any preceding claim wherein each bump has substantially no sharp convex edges or points.

10. The structure of any preceding claim wherein the aerodynamic structure is an aerofoil and the surface is a low pressure surface of the aerofoil.

11. A method of operating an aerodynamic structure comprising an array of shock bumps extending from its surface, the array comprising a first series of shock bumps (3), the method comprising: operating the structure at a first Mach number or lift coefficient; operating the structure at a second Mach number or lift coefficient;
a. wherein the first series of shock bumps (3) modify the structure of a shock which forms adjacent to the surface of the structure when it is operated at the first Mach number or lift coefficient; and **characterised in that**
b. one or more shock bumps (10) positioned aft of the first series to modify the structure of a shock which forms adjacent to the surface of the structure when it is operated at the second Mach number or lift coefficient which is higher than the first Mach number or lift coefficient,
wherein the first series of shock bumps induces a smeared foot in the shock with a lambda like wave pattern when the structure is operated at the first Mach number or lift coefficient; and wherein the one or more shock bumps positioned aft of the first series induces a smeared foot in the shock with a lambda like wave pattern when the structure is operated at the second Mach number or lift coefficient, wherein the flow over at least one of the shock bumps of the one or more shock bumps positioned aft of the first series is substantially fully attached when the structure is operated at the first Mach number or lift coefficient.

12. The method of claim 11 wherein the flow over at least one of the one or more shock bumps positioned aft of the first series detaches and forms a pair of longitudinal vortices (12,13) when the structure is operated at the second Mach number or lift coefficient.

## Patentansprüche

1. Aerodynamische Struktur, umfassend eine Anordnung von Stoßhöckern, die sich von ihrer Oberfläche erstrecken, wobei die Anordnung umfasst:
a. eine erste Reihe von Stoßhöckern (3), die in einer im Wesentlichen geraden oder allmählich gekrümmten Linie angeordnet sind, und **gekennzeichnet durch**
b. einen oder mehrere Stoßhöcker (10), die hinter der ersten Reihe angeordnet sind, wodurch ein oder mehrere Stoßhöcker bereitgestellt werden, die hinter der ersten Reihe anstelle einer einzelnen Linie angeordnet sind,
wobei die erste Reihe von Stoßhöckern so geformt und positioniert ist, dass in einem Stoß mit einem lambdaartigen Wellenmuster eine verwischte Basis induziert wird, wenn die Struktur bei einer ersten Machzahl oder einem ersten Auftriebsbeiwert betrieben wird, und wobei der eine oder die mehreren hinter der ersten Reihe angeordnete(n) Stoßhöcker so geformt und positioniert ist (sind), dass in dem Stoß mit einem lambdaartigen Wellenmuster eine verwischte Basis induziert wird, wenn die Struktur bei einer zweiten Machzahl oder einem zweiten Auftriebsbeiwert betrieben wird, wobei die Strömung über wenigstens einen der Stoßhöcker der hinter der ersten Reihe angeordneten einen oder mehreren Stoßhöcker im Wesentlichen vollständig anliegt, wenn die Struktur bei der ersten Machzahl oder dem ersten Auftriebsbeiwert betrieben wird.

2. Struktur nach Anspruch 1, wobei die einen oder mehreren hinter der ersten Reihe angeordneten Stoßhöcker ein einzelner Stoßhöcker ist.

3. Struktur nach Anspruch 1, wobei die einen oder mehreren hinter der ersten Reihe angeordneten Stoßhöcker eine zweite Reihe von Stoßhöckern ist.

4. Struktur nach Anspruch 3, wobei es in der zweiten Reihe weniger Stoßhöcker gibt als in der ersten Reihe.

5. Struktur nach einem der vorherigen Ansprüche, wobei eine Vorderkante wenigstens eines der einen oder mehreren Stoßhöcker (30b), die hinter der ersten Reihe angeordnet sind, vor einer Hinterkante wenigstens eines angrenzenden Höckers (30a) in der ersten Reihe angeordnet ist.

6. Struktur nach einem der vorherigen Ansprüche, wobei ein Mittelpunkt wenigstens eines der einen oder mehreren Stoßhöcker, die hinter der ersten Reihe angeordnet sind, so versetzt ist, dass er nicht direkt hinter einem Mittelpunkt eines der Stoßhöcker in der ersten Reihe angeordnet ist.

7. Struktur nach einem der vorherigen Ansprüche, wobei wenigstens einer der Stoßhöcker ein divergierendes Vorderteil und ein konvergierendes Hinterteil umfasst, wobei das Hinterteil wenigstens eine Grundriss-Konturlinie mit einem Paar konkaver gegenüberliegender Seiten aufweist, die sich vorzugsweise an einer Spitze (10b) treffen.

8. Struktur nach einem der vorherigen Ansprüche, wobei jeder Höcker eine Vorderkante (3a), eine Hinterkante (3b), eine Innenbordkante (3c) und eine Außenbordkante (3d) aufweist.

9. Struktur nach einem der vorherigen Ansprüche, wobei jeder Höcker im Wesentlichen keine scharfe konvexe Kanten oder Punkte aufweist.

10. Struktur nach einem der vorherigen Ansprüche, wobei die aerodynamische Struktur eine Tragfläche und die Oberfläche die Niederdruckfläche der Tragfläche ist.

11. Verfahren zum Betreiben einer aerodynamischen Struktur, umfassend eine Anordnung von Stoßhöckern, die sich von ihrer Oberfläche erstrecken, wobei die Anordnung eine erste Reihe von Stoßhöckern (3) umfasst, wobei das Verfahren umfasst: Betreiben der Struktur bei einer ersten Machzahl oder einem ersten Auftriebsbeiwert, Betreiben der Struktur bei einer zweiten Machzahl oder einem zweiten Auftriebsbeiwert,
a. wobei die erste Reihe von Stoßhöckern (3) die Struktur eines Stoßes modifiziert, der sich an der Oberfläche der Struktur ausbildet, wenn sie bei der ersten Machzahl oder dem ersten Auftriebsbeiwert betrieben wird, und **dadurch gekennzeichnet, dass**
b. ein oder mehrere Stoßhöcker (10), die hinter der ersten Reihe angeordnet sind, die Struktur des Stoßes modifizieren, der sich an der Oberfläche der Struktur angrenzend ausbildet, wenn sie bei der zweiten Machzahl oder dem zweiten Auftriebsbeiwert betrieben wird, welche(r) größer ist als die erste Machzahl oder der erste Auftriebsbeiwert,
wobei die erste Reihe von Stoßhöckern in einem Stoß mit einem lambdaartigen Wellenmuster eine verwischte Basis induziert wird, wenn die Struktur bei der ersten Machzahl oder dem ersten Auftriebsbeiwert betrieben wird, und wobei der eine oder die mehreren hinter der ersten Reihe angeordnete(n) Stoßhöcker in dem Stoß mit einem lambdaartigen Wellenmuster eine verwischte Basis induziert bzw. induzieren, wenn die Struktur bei der zweiten Machzahl oder dem zweiten Auftriebsbeiwert betrieben wird,
wobei die Strömung über wenigstens einen der Stoßhöcker der hinter der ersten Reihe angeordneten einen oder mehreren Stoßhöcker im Wesentlichen vollständig anliegt, wenn die Struktur bei der ersten Machzahl oder dem ersten Auftriebsbeiwert betrieben wird.

12. Verfahren nach Anspruch 11, wobei sich die Strömung über wenigstens einen der hinter der ersten Reihe angeordneten einen oder mehreren Stoßhöcker ablöst und ein Paar Längswirbel (12, 13) bildet, wenn die Struktur bei der zweiten Machzahl oder dem zweiten Auftriebsbeiwert betrieben wird.

## Revendications

1. Structure aérodynamique comprenant un réseau de bosses antichocs s'étendant à partir de sa surface, le réseau comprenant.
a. une première série de bosses antichocs (3) agencées en une ligne sensiblement droite ou progressivement incurvée ; et **caractérisée en ce que**
b. une ou plusieurs bosses antichocs (10) sont positionnées à l'arrière de la première série, fournissant ainsi une ou plusieurs bosses antichocs positionnées à l'arrière de la première série à la place d'une seule ligne,
dans lequel la première série de bosses antichocs est façonnée et positionnée de sorte à induire un pied étalé dans un choc ayant un motif d'onde de type lambda lorsque la structure est utilisée à un premier nombre de Mach ou coefficient de portance, et dans lequel la ou les bosse(s) antichocs positionnée(s) à l'arrière de la première série est(sont) façonnée(s) et positionnée(s) de sorte à induire un pied étalé dans le choc ayant un motif d'onde de type lambda lorsque la structure est utilisée à un second nombre de Mach ou coefficient de portance, dans lequel le flux au-dessus d'au moins une des bosses antichocs de la ou des bosse(s) antichocs positionnée(s) à l'arrière de la première série est sensiblement complètement attaché lorsque la structure est utilisée au premier nombre de Mach ou coefficient de portance.

2. Structure selon la revendication 1, dans laquelle la ou les bosses antichocs positionnées à l'arrière de la première série sont une seule bosse antichocs.

3. Structure selon la revendication 1, dans laquelle la ou les bosses antichocs positionnées à l'arrière de la première série sont une seconde série de bosses antichocs.

4. Structure selon la revendication 3, dans laquelle la seconde série comporte moins de bosses antichocs que la première série.

5. Structure selon l'une quelconque des revendications précédentes, dans laquelle un bord d'attaque d'au moins l'une de la ou des bosse(s) antichocs (30b) positionnée(s) à l'arrière de la première série est positionné à l'avant d'un bord de fuite d'au moins une bosse adjacente des bosses (30a) de la première série.

6. Structure selon l'une quelconque des revendications précédentes, dans laquelle un centre d'au moins une de la ou des bosse(s) antichocs positionnée(s) à l'arrière de la première série est décalé de sorte qu'il n'est pas positionné directement à l'arrière d'un centre de l'une quelconque des bosses antichocs dans la première série.

7. Structure selon l'une quelconque des revendications précédentes, dans laquelle au moins une des bosses antichocs comprend un nez divergent et une queue convergente, dans laquelle la queue a au moins une ligne de contour de forme plane avec une paire de côtés opposés concaves qui se rencontrent de préférence au niveau d'une pointe (10b).

8. Structure selon l'une quelconque des revendications précédentes, dans laquelle chaque bosse a un bord d'attaque (3a), un bord de fuite (3b), un bord intérieur (3c) et un bord extérieur (3d).

9. Structure selon l'une quelconque des revendications précédentes, dans laquelle chaque bosse n'a sensiblement aucun bord ou point convexe pointu.

10. Structure selon l'une quelconque des revendications précédentes, dans laquelle la structure aérodynamique est une surface portante et la surface est une surface basse pression de la surface portante.

11. Procédé d'utilisation d'une structure aérodynamique comprenant un réseau de bosses antichocs s'étendant à partir de sa surface, le réseau comprenant une première série de bosses antichocs (3), le procédé comprenant : l'utilisation de la structure à un premier nombre de Mach ou coefficient de portance ; l'utilisation de la structure à un second nombre de Mach ou coefficient de portance ;
a. dans lequel la première série de bosses antichocs (3) modifie la structure d'un choc qui se forme de manière adjacente à la surface de la structure lorsqu'elle est utilisée au premier nombre de Mach ou coefficient de portance ; et **caractérisé en ce que**
b. une ou plusieurs bosse (s) (10) positionnée(s) à l'arrière de la première série pour modifier la structure d'un choc qui se forme de manière adjacente à la surface de la structure lorsqu'elle est utilisée au second nombre de Mach ou coefficient de portance qui est plus élevé que le premier nombre de Mach ou coefficient de portance,
dans lequel la première série de bosses antichocs induit un pied étalé dans le choc ayant un motif d'onde de type lambda lorsque la structure est utilisée au premier nombre de Mach ou coefficient de portance, et dans lequel la ou les bosse(s) antichocs positionnée(s) à l'arrière de la première série induit/induisent un pied étalé dans le choc ayant un motif d'onde de type lambda lorsque la structure est utilisée au second nombre de Mach ou coefficient de portance,
dans lequel le flux au-dessus d'au moins une des bosses antichocs de la ou des bosse(s) antichocs positionnée(s) à l'arrière de la première série est sensiblement complètement attaché lorsque la structure est utilisée au premier nombre de Mach ou coefficient de portance.

12. Procédé selon la revendication 11, dans lequel le flux au-dessus d'au moins une de la ou des bosse(s) antichocs positionnée(s) à l'arrière de la première série se détache et forme une paire de tourbillons longitudinaux (12, 13) lorsque la structure est utilisée au second nombre de Mach ou coefficient de portance.
